(19) **Europäisches Patentamt / European Patent Office / Office européen des brevets**

(11) **EP 4 516 933 A1**

(12) **EUROPEAN PATENT APPLICATION**
published in accordance with Art. 153(4) EPC

(43) Date of publication:
**05.03.2025  Bulletin 2025/10**

(21) Application number: **23839303.7**

(22) Date of filing: **19.05.2023**

(51) International Patent Classification (IPC):
**C21B 5/00** (2006.01)    **C21B 7/24** (2006.01)

(52) Cooperative Patent Classification (CPC):
**C21B 5/00; C21B 7/24;** Y02P 10/20

(86) International application number:
**PCT/JP2023/018727**

(87) International publication number:
**WO 2024/014126 (18.01.2024 Gazette 2024/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:  **11.07.2022   JP 2022111106**

(71) Applicant: **JFE Steel Corporation**
**Tokyo 100-0011 (JP)**

(72) Inventors:
• **ICHIKAWA, Kazuhira**
  **Tokyo 100-0011 (JP)**
• **SATO, Takeshi**
  **Tokyo 100-0011 (JP)**
• **YAMAMOTO, Tetsuya**
  **Tokyo 100-0011 (JP)**
• **CAO, Ningyuan**
  **Tokyo 100-0011 (JP)**
• **OKAMOTO, Yuki**
  **Tokyo 100-0011 (JP)**

(74) Representative: **Grünecker Patent- und Rechtsanwälte**
**PartG mbB**
**Leopoldstraße 4**
**80802 München (DE)**

(54) **CONTROL METHOD AND CONTROL DEVICE FOR BLAST FURNACE**

(57)    A control method for a blast furnace according to the present invention includes the steps of estimating a temperature distribution in a residual solidified layer in restarting a blast furnace by using a temperature distribution estimation model for the residual solidified layer, estimating an expansion behavior of the residual solidified layer by using an expansion estimation model for the residual solidified layer according to an estimated temperature distribution and estimating a stress applied to a furnace body steel shell of the blast furnace according to the estimated expansion behavior of the residual solidified layer, and controlling, when the estimated stress is equal to or larger than an allowable value, an increase rate in the number of blast tuyeres to be opened to a predetermined value or less and controlling a position of a taphole from which molten metal is discharged.

FIG.2

BLAST FURNACE CONTROL PROCESS

↓

ESTIMATE TEMPERATURE DISTRIBUTION IN RESIDUAL SOLIDIFIED LAYER — S1

↓

ESTIMATE STRESS APPLIED TO STEEL SHELL CAUSED BY EXPANSION OF RESIDUAL SOLIDIFIED LAYER — S2

↓

IS STRESS EQUAL TO OR LARGER THAN PREDETERMINED VALUE? — S3 — NO

↓ YES

CONTROL INCREASE RATE IN NUMBER OF BLAST TUYERES AND CONTROL TAPHOLE FROM WHICH MOLTEN METAL IS DISCHARGED — S4

↓

END

**EP 4 516 933 A1**

**Description**

Field

The present invention relates to a control method and a control device for a blast furnace.

Background

Shutdown of a blast furnace for a long period of time for production amount adjustment in or large-scale repair of the blast furnace solidifies pig iron remaining in a region below a taphole. Therefore, upon restarting the blast furnace, the solidified pig iron is expanded by heating, a furnace body steel shell is expanded by expansion of the pig iron until the pig iron melts, and stress is applied to the furnace body steel shell. When the stress equal to or larger than an allowable value is applied to the furnace body steel, the furnace body steel shell may be damaged. Therefore, in Patent Literature 1, for a shutdown of a blast furnace for a long period of time, a method is proposed to inhibit expansion of the furnace body steel shell caused by solidified pig iron expanded upon restarting due to insertion of shrinkable mortar into a gap formed by cooling and shrinking of the pig iron causing entrance of coke or the like into the gap. In addition, in Patent Literature 2, for a shutdown of a blast furnace for a long period of time, a method is proposed to carry equipment into the blast furnace to mechanically scrape out residues in the blast furnace.

Citation List

Patent Literature

    Patent Literature 1: JP H1-159308 A
    Patent Literature 2: JP H9-287010 A

Summary

Technical Problem

However, when a measure, such as the shrinkable mortar or the equipment, is charged into the furnace as in the methods described in Patent Literature 1 and Patent Literature 2, it is necessary to lower furnace temperature to a temperature suitable for the measure. Therefore, when a shutdown period of the blast furnace is fluid, it may be difficult to restart the blast furnace according to the situation of the blast furnace. Furthermore, when a hole is provided for carrying the equipment in the blast furnace, the hole needs to be processed by welding or the like to be closed before restarting, but a defect may occur from the processed portion and air leakage may occur.

The present invention has been made to solve the above problems, and an object of the present invention is to provide a control method and a control device for a blast furnace that are configured to suppress application of a stress equal to or larger than an allowable value to a furnace body steel shell of the blast furnace upon restarting the blast furnace, without charging a measure into the blast furnace.

Solution to Problem

A control method for a blast furnace according to the present invention includes the steps of: estimating a temperature distribution in a residual solidified layer in restarting a blast furnace by using a temperature distribution estimation model for the residual solidified layer; estimating an expansion behavior of the residual solidified layer by using an expansion estimation model for the residual solidified layer according to an estimated temperature distribution, and estimating a stress applied to a furnace body steel shell of the blast furnace according to the estimated expansion behavior of the residual solidified layer; and controlling, when the estimated stress is equal to or larger than an allowable value, an increase rate in the number of blast tuyeres to be opened to a predetermined value or less and controlling a position of a taphole from which molten metal is discharged.

A step of correcting the temperature distribution estimation model and the expansion estimation model depending on a difference between a measured value and an estimated value of the stress applied to the furnace body steel shell of the blast furnace may be included.

A control device for a blast furnace, the control device according to the present invention includes: means for estimating a temperature distribution in a residual solidified layer in restarting a blast furnace by using a temperature distribution estimation model for the residual solidified layer; means for estimating an expansion behavior of the residual solidified layer by using an expansion estimation model for the residual solidified layer according to an estimated temperature distribution, and estimating a stress applied to a furnace body steel shell of the blast furnace according to the estimated expansion behavior of the residual solidified layer; and means for controlling, when the estimated stress is equal to or larger than an allowable value, an increase rate in the number of blast tuyeres to be opened to a predetermined value or less and controlling a position of a taphole from which molten metal is discharged.

Advantageous Effects of Invention

According to the control method and the control device for the blast furnace of the present invention, it is possible to suppress application of the stress equal to or larger than the allowable value to the furnace body steel shell of the blast furnace upon restarting the blast furnace without charging the measure into the blast furnace.

Brief Description of Drawings

FIG. 1 is a block diagram illustrating a configuration of a blast furnace control device according to an embodiment of the present invention.
FIG. 2 is a flowchart illustrating a procedure of a blast furnace control process according to an embodiment of the present invention.
FIG. 3 is a graph illustrating a relationship between measured values and calculated values of stress applied to a furnace body steel shell.
FIG. 4 is a graph illustrating calculated values of stress applied to a furnace body steel shell with all tuyeres opened, with some tuyeres opened, and with opening of some tuyeres changed to opening of all tuyeres. Description of Embodiments

A blast furnace control device according to an embodiment of the present invention will be described below with reference to the drawings.

[Configuration]

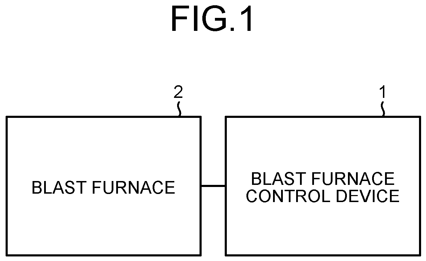

First, a configuration of the blast furnace control device according to an embodiment of the present invention will be described with reference to FIG. 1.

FIG. 1 is a block diagram illustrating the configuration of the blast furnace control device according to an embodiment of the present invention. As illustrated in FIG. 1, the blast furnace control device 1 according to the embodiment of the present invention includes an information processing device such as a computer. In the blast furnace control device 1, an arithmetic processing device such as a CPU in the information processing device executes a computer program to control an operation state of a blast furnace 2.

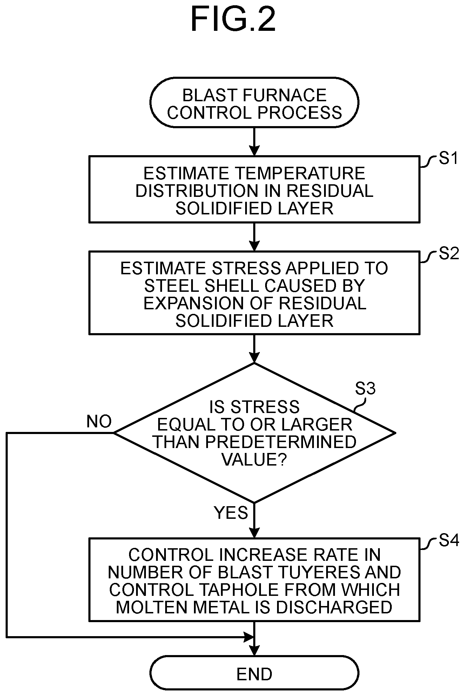

The blast furnace control device 1 having such a configuration performs a blast furnace control process described below to suppress application of a stress equal to or larger than an allowable value to a furnace body steel shell of the blast furnace 2 upon restarting the blast furnace 2, without charging a measure into the blast furnace 2. Hereinafter, the operation of the blast furnace control device 1 upon performing the blast furnace control process will be described with reference to FIG. 2.

[Blast furnace control process]

FIG. 2 is a flowchart illustrating a procedure of the blast furnace control process according to an embodiment of the present invention. The flowchart illustrated in FIG. 2 starts at the timing when an instruction on restarting is given after shutdown of the blast furnace **2,** and the blast furnace control process proceeds to the processing of Step S1.

In the processing of Step S1, the blast furnace control device 1 estimates a temperature distribution in a residual solidified layer due to heating of the residual solidified layer in a region ranging from immediately below an opening tuyere of the blast furnace 2 to an operating taphole, on the assumption that molten metal flows from immediately below the opening tuyere of the blast furnace 2 to the operating taphole. Specifically, the blast furnace control device 1 estimates the temperature distribution in the residual solidified layer by using equations of transient heat conduction illustrated in the following Formulas (1) and (2) as basic equations. In Formulas (1) and (2), T is a temperature (K), t is a time (s), x, y, and z are coordinates (m), $\lambda$ is a heat conductivity (W/(m·K)) of the region, $C_p$ is a specific heat (J/(kg·K)) of the region, and $\rho$ is a density (kg/m$^3$) of the region. In addition, peripheral boundary conditions are determined in consideration of heat transfer from a hearth cooling pipe for a furnace bottom, heat transfer from side wall cooling for an outer peripheral portion, and heat transfer of molten metal from a portion corresponding to a lower portion from the opening tuyere for a contact surface between the molten metal and the solidified layer, by changing heat transfer coefficients thereof depending on an operation state. Therefore, the processing of Step S1 is completed, and the blast furnace control process proceeds to the processing of Step S2.

$$\frac{\partial T}{\partial t} = \alpha \left( \frac{\partial^2 T}{\partial x^2} + \frac{\partial^2 T}{\partial y^2} + \frac{\partial^2 T}{\partial z^2} \right) \qquad \cdots (1)$$

$$\alpha = \frac{\lambda}{C_p \rho} \qquad \cdots (2)$$

In the processing of Step S2, the blast furnace control device 1 estimates an expansion behavior of the residual solidified layer by using an expansion estimation model, according to the temperature distribution in the residual solidified layer estimated in the processing of Step S1. Specifically, the blast furnace control device 1 gives a temperature change $\Delta T$ to the structure on the basis of the temperature distribution in the residual solidified layer estimated in the processing of Step S1, and estimates thermal strain (thermal stress) at each portion of the structure by using a Hooke's law indicated in the following Formula (3). In Formula (3), $\varepsilon_i$ is a strain (-) in an i-direction of the structure, E is a Young's modulus (kPa), $\sigma_i$ is a stress (kPa) in the i-direction of the structure, $\Delta T$ is a temperature change (K), $\alpha$ is a thermal expansion coefficient (1/K), v is a Poisson's ratio (-), $\sigma_j$ is a stress (kPa) in a j-direction, and $\sigma_k$ is a stress (kPa) in a k-direction. At this time, in the blast furnace control device 1, it is assumed that a region of the residual solidified layer having a temperature equal to or higher than a melting point is melted and the region is excluded from the estimation of the expansion behavior. Then, the blast furnace control device 1 estimates a stress applied to the furnace body steel shell according to the estimated expansion behavior of the residual solidified layer. Therefore, the processing of Step S2 is completed, and the blast furnace control process proceeds to the processing of Step S3.

$$\varepsilon_i = \frac{1}{E} \left[ \sigma_i - v(\sigma_j + \sigma_k) \right] + \Delta T \alpha \qquad \cdots (3)$$

In the processing of Step S3, the blast furnace control device 1 determines whether the stress applied to the furnace body steel shell estimated in the processing of Step S2 is equal to or larger than a predetermined value (allowable value). As a result of the determination, when the stress applied to the furnace body steel shell is equal to or larger than the predetermined value (Step S3: Yes), the blast furnace control device 1 proceeds to the processing of Step S4 of the blast furnace control process. Meanwhile, when the stress applied to the furnace body steel shell is less than the predetermined value (Step S3: No), the blast furnace control device 1 finishes a series of the steps of the blast furnace control process.

In the processing of Step S4, the blast furnace control device 1 controls an increase rate in the number of blast tuyeres to be opened to a predetermined value or less and controls the position of a taphole from which molten metal is discharged. Controlling the increase rate in the number of blast tuyeres to be opened to the predetermined value or less makes it possible to suppress heating of a wide range of the residual solidified layer. In addition, controlling the position of the taphole from which molten metal is discharged makes it possible to intensively heat the residual solidified layer to promote melting of the residual solidified layer. The taphole through which molten metal is discharged is preferably positioned near a blast tuyere opened. This processing makes it possible to relax the stress applied to the furnace body steel shell. During repetition of such operation, the number of openings of the blast tuyeres is increased, and when all the tuyeres are opened or a target number of tuyeres initially set is obtained, the processing of Step S4 is completed, and the series of the steps of the blast furnace control processes is finished.

As is clear from the above description, in the blast furnace control process according to an embodiment of the present invention, the blast furnace control device 1 estimates the temperature distribution in the residual solidified layer in restarting the blast furnace 2 by using a temperature distribution estimation model for the residual solidified layer, estimates the expansion behavior of the residual solidified layer by using the expansion estimation model for the residual solidified layer according to the estimated temperature distribution, and estimates the stress applied to the furnace body steel shell of the blast furnace 2 according to the estimated expansion behavior of the residual solidified layer, and when the estimated stress is equal to or larger than the predetermined value, the blast furnace control device 1 controls the increase rate in the number of blast tuyeres to be opened to the predetermined value or less and controls the position of the taphole from which the molten metal is discharged, therefore, suppressing application of the stress equal to or larger than the allowable value to the furnace body steel shell of the blast furnace upon restarting the blast furnace 2, without charging the measure into the blast furnace 2.

A stress sensor may be installed in the furnace body to measure the stress applied to the furnace body steel shell so as to correct the temperature distribution estimation model or the expansion estimation model when there is a difference equal to or larger than the allowable value between a measured value and an estimated value of the stress. Specifically, the temperature distribution in the residual solidified layer estimated by the temperature distribution estimation model is preferably compared with data of several thermometers installed at the furnace bottom to correct a cooling condition (heat transfer coefficient) of the temperature distribution estimation model so that the temperature distribution in the residual solidified layer approaches the data of the thermometer. In addition, when there is a difference equal to or larger than the allowable value between the measured value and the estimated value of the stress even if the temperature distribution estimation model is corrected, it is preferable to correct the expansion coefficient of the residual solidified layer in the expansion estimation model.

Examples

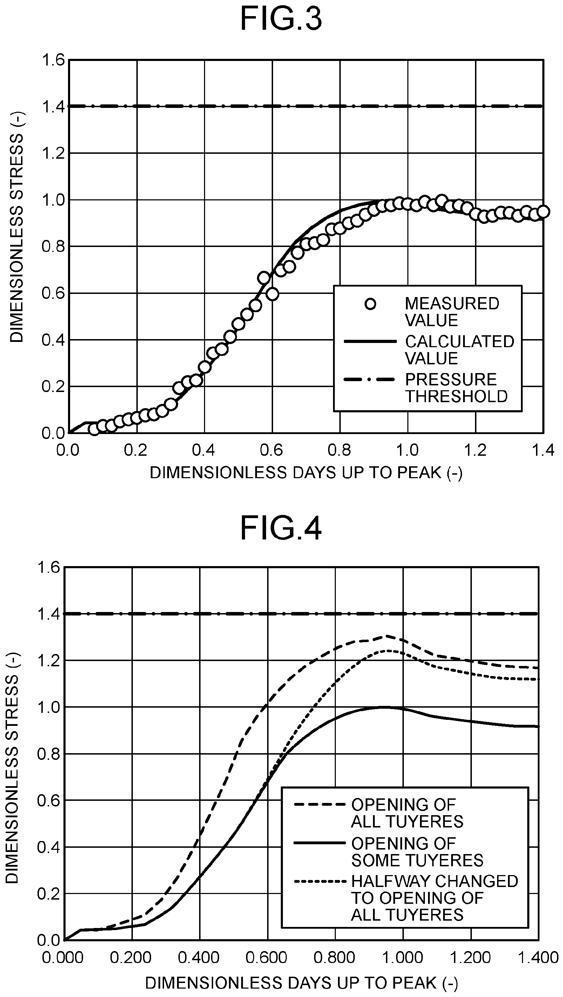

In the present example, a stress (actual value) applied to the furnace body steel shell measured by a stress sensor was compared with the stress (calculated value) applied to the furnace body steel shell estimated in the blast furnace control process. Results of the comparison are illustrated in FIG. 3. In FIG. 3, the number of days nondimensionalized is displayed with the day on which the blast furnace is restarted as 0.0 and the day on which the stress applied to the furnace body steel shell reaches a peak as 1.0. Furthermore, for restarting the blast furnace, the number of blast tuyeres was gradually increased so that all the blast tuyeres were opened in approximately 0.7 dimensionless days. In addition, for 0.5 dimensionless days, molten metal was discharged only from a specific taphole closer to a blast tuyere opened to limit a heated region of the residual solidified layer, thus, alleviating an increase in stress caused by expansion of the residual solidified layer. As illustrated in FIG. 3, the actual values match the calculated values well. From this result, it was confirmed that, according to the present invention, the stress applied to the furnace body steel shell can be accurately estimated to suppress application of the stress equal to or larger than the allowable value to the furnace body steel shell of the blast furnace 2 upon restarting the blast furnace 2. Next, as illustrated in FIG. 4, calculated values of the stress applied to the furnace body steel shell were compared between when all the blast tuyeres were opened from restarting (opening of all tuyeres) and when the number of the blast tuyeres to be opened was gradually increased (opening of some tuyeres). As illustrated in FIG. 4, in the opening of all tuyeres, the entire residual solidified layer was heated from an early stage, and therefore, the stress increased and closely approached a pressure threshold. In contrast, in the opening of some tuyeres, the increase in stress was suppressed. Based on these results, FIG. 4 also illustrates an example in which the opening of some tuyeres was performed for 0.6 dimensionless days, and the opening was changed to the opening of all tuyeres upon confirmation of the suppression of the increase in stress, thus reducing a start-up period. In this example as well, operation can be performed with a stress less than a prescribed stress, and it was confirmed that this method contributes to shortening the start-up period while protecting the steel shells. From the above descriptions, it was confirmed that the number of openings of the blast tuyeres is effectively controlled while referring to the calculated values of the stress, for the start-up operation from the long-term blowing-down while protecting the furnace body steel shell.

Although the embodiments to which the invention made by the present inventors is applied have been described above, the present invention is not limited to the descriptions and drawings constituting part of the disclosure of the present invention according to the present embodiments. In other words, other embodiments, examples, operation techniques, and the like made by those skilled in the art and the like on the basis of the present embodiment are all included in the scope of the present invention.

Industrial Applicability

According to the present invention, it is possible to provide the control method and the control device for the blast furnace that are configured to suppress application of the stress equal to or larger than the allowable value to the furnace body steel shell of the blast furnace upon restarting the blast furnace, without charging the measure into the blast furnace.

Reference Signs List

1 BLAST FURNACE CONTROL DEVICE
2 BLAST FURNACE

**Claims**

1. A control method for a blast furnace comprising the steps of:

   estimating a temperature distribution in a residual solidified layer in restarting a blast furnace by using a temperature distribution estimation model for the residual solidified layer;
   estimating an expansion behavior of the residual solidified layer by using an expansion estimation model for the residual solidified layer according to an estimated temperature distribution, and estimating a stress applied to a furnace body steel shell of the blast furnace according to the estimated expansion behavior of the residual solidified layer; and
   controlling, when the estimated stress is equal to or larger than an allowable value, an increase rate in the number of blast tuyeres to be opened to a predetermined value or less and controlling a position of a taphole from which molten metal is discharged.

2. The control method for a blast furnace according to claim 1, further comprising a step of correcting the temperature distribution estimation model and the expansion estimation model depending on a difference between a measured value and an estimated value of the stress applied to the furnace body steel shell of the blast furnace.

3. A control device for a blast furnace, the control device comprising:

   means for estimating a temperature distribution in a residual solidified layer in restarting a blast furnace by using a temperature distribution estimation model for the residual solidified layer;
   means for estimating an expansion behavior of the residual solidified layer by using an expansion estimation model for the residual solidified layer according to an estimated temperature distribution, and estimating a stress applied to a furnace body steel shell of the blast furnace according to the estimated expansion behavior of the residual solidified layer; and
   means for controlling, when the estimated stress is equal to or larger than an allowable value, an increase rate in the number of blast tuyeres to be opened to a predetermined value or less and controlling a position of a taphole from which molten metal is discharged.

# FIG.1

BLAST FURNACE — BLAST FURNACE CONTROL DEVICE

# FIG.2

BLAST FURNACE
CONTROL PROCESS

ESTIMATE TEMPERATURE
DISTRIBUTION IN RESIDUAL
SOLIDIFIED LAYER ⌐S1

ESTIMATE STRESS APPLIED TO
STEEL SHELL CAUSED BY
EXPANSION OF RESIDUAL
SOLIDIFIED LAYER ⌐S2

IS STRESS
EQUAL TO OR LARGER
THAN PREDETERMINED
VALUE? S3

NO

YES

CONTROL INCREASE RATE IN
NUMBER OF BLAST TUYERES AND
CONTROL TAPHOLE FROM WHICH
MOLTEN METAL IS DISCHARGED ⌐S4

END

## FIG.3

## FIG.4

## INTERNATIONAL SEARCH REPORT

| International application No. |
| --- |
| **PCT/JP2023/018727** |

### A.     CLASSIFICATION OF SUBJECT MATTER

**C21B 5/00**(2006.01)i; **C21B 7/24**(2006.01)i
FI:    C21B5/00 314; C21B7/24 306

According to International Patent Classification (IPC) or to both national classification and IPC

### B.     FIELDS SEARCHED

Minimum documentation searched (classification system followed by classification symbols)

C21B5/00; C21B7/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.     DOCUMENTS CONSIDERED TO BE RELEVANT

| Category* | Citation of document, with indication, where appropriate, of the relevant passages | Relevant to claim No. |
| --- | --- | --- |
| A | JP 1-159308 A (SUMITOMO METAL INDUSTRIES, LTD.) 22 June 1989 (1989-06-22) entire text, all drawings | 1-3 |
| A | JP 57-171605 A (KAWASAKI STEEL CORP.) 22 October 1982 (1982-10-22) entire text, all drawings | 1-3 |
| A | JP 2016-30833 A (JFE STEEL CORP.) 07 March 2016 (2016-03-07) entire text, all drawings | 1-3 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 August 2023** | **15 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/018727**

| Patent document cited in search report | | | Publication date (day/month/year) | Patent family member(s) | Publication date (day/month/year) |
|---|---|---|---|---|---|
| JP | 1-159308 | A | 22 June 1989 | (Family: none) | |
| JP | 57-171605 | A | 22 October 1982 | (Family: none) | |
| JP | 2016-30833 | A | 07 March 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1159308 A

- JP H9287010 A